(19) Europäisches Patentamt
European Patent Office
Office européen des brevets

(11) **EP 3 087 699 B1**

(12) **EUROPÄISCHE PATENTSCHRIFT**

(45) Veröffentlichungstag und Bekanntmachung des Hinweises auf die Patenterteilung:
**01.05.2019** **Patentblatt 2019/18**

(21) Anmeldenummer: **15713305.9**

(22) Anmeldetag: **19.03.2015**

(51) Int Cl.:
*H04L 12/24* (2006.01)     *H04L 12/26* (2006.01)

(86) Internationale Anmeldenummer:
**PCT/EP2015/055755**

(87) Internationale Veröffentlichungsnummer:
**WO 2015/150085 (08.10.2015 Gazette 2015/40)**

(54) **DETEKTIEREN EINES FEHLERHAFTEN KNOTENS IN EINEM NETZWERK**

DETECTION OF A FAULTY NODE IN A NETWORK

DÉTECTION D'UN NOEUD DÉFECTUEUX DANS UN RÉSEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2014 DE 102014206053**

(43) Veröffentlichungstag der Anmeldung:
**02.11.2016 Patentblatt 2016/44**

(73) Patentinhaber: **Siemens Aktiengesellschaft 80333 München (DE)**

(72) Erfinder:
• **ARMBRUSTER, Michael**
  **80339 München (DE)**
• **FIEGE, Ludger**
  **85567 Grafing (DE)**
• **RIEDL, Johannes**
  **84030 Ergolding (DE)**
• **SCHMID, Thomas**
  **70771 Leinfelden-Echterdingen (DE)**
• **ZIRKLER, Andreas**
  **81735 München (DE)**

(56) Entgegenhaltungen:
**WO-A1-2008/001157     DE-A1-102012 000 185
US-A1- 2014 047 282**

• **ZHOU RUI ET AL: "On design and formal verification of SNSP: a novel real-time communication protocol for safety-critical applications", JOURNAL OF SUPERCOMPUTING, KLUWER ACADEMIC PUBLISHERS, DORDRECHT, NL, Bd. 69, Nr. 3, 18. März 2014 (2014-03-18), Seiten 1254-1283, XP035393948, ISSN: 0920-8542, DOI: 10.1007/S11227-014-1157-2 [gefunden am 2014-03-18]**

**Beschreibung**

Die Erfindung betrifft Verfahren und Vorrichtungen zum Identifizieren eines vorliegenden fehlerhaften Knotens in einem Netzwerk.

Netzwerke werden neben einer Übermittlung von Sprach- und Bilddaten heutzutage vielmals für sicherheitskritische Anwendungen eingesetzt. So besteht beispielsweise ein Automatisierungssystem aus mehreren Steuerungsrechnern, Sensoren und Aktoren, die Knoten in einem Netzwerk darstellen. Hierbei darf eine Datenkommunikation zwischen den Knoten durch ein Fehlverhalten eines einzelnen Knotens nicht derart gestört werden, dass die funktionale Sicherheit des gesamten Automatisierungssystems gefährdet wird. Ein derartiger Fehlerfall ist beispielsweise bekannt unter einem Namen "babbling idiot". Hierunter ist ein Knoten zu verstehen, der entgegen geplanter Ressourcenvereinbarungen und ggf. sogar entgegen einer Spezifikation der Datenkommunikation Daten in großer Menge versendet und damit das Netzwerk belegt bzw. eine Kommunikation anderer Knoten behindert oder gar korrumpiert.

Eine deutsche Patentanmeldung DE 10 2012 000 185 schlägt vor, eine verbesserte Ausfallsicherheit und Fehleranalyse bei Übertragungs- und Hardwarefehlern, insbesondere bei "babbling-idiot" Fehlern, in einem Netzwerk dadurch zu gewährleisten, dass an Empfangsports von Switch-Einrichtungen Fuse-Einrichtungen zum Überwachen einer jeweiligen Datenübertragungsrate zugeordnet sind. Die Fuse-Einrichtungen blockieren einen Datenempfang am jeweiligen Empfangsport, wenn eine zuvor vorgegebene maximale Datenübertragungsrate überschritten wird. Diese Vorgehensweise ist vorteilhaft, da sie in einfacher Weise implementiert und realisiert werden kann. Nachteilig ist jedoch, dass bei starken Schwankungen in der Datenübertragungsrate ein Fehlalarm aufgrund der vorgegebenen maximalen Datenübertragungsrate ausgelöst werden könnte, der den Datenempfang irrtümlicherweise blockiert. Hierdurch kommt es zu ungewolltem Datenverlust, wodurch eine Dienstgüte des Netzwerks sinkt. Zudem ist es erforderlich, eine zu erwartende Datenrate im Vorhinein zu kennen und einzustellen.

Aus der US 2014/047282 A1 ist ein FlexRay-Netzwerkwächter bekannt. Dieser umfasst einen Rückstell-Kaltstartknoten- (RLCN) Detektor, der ausgebildet ist, um einen RLCN-Fehler zu erkennen, sowie einen Detektor für taube Kaltstartknoten (DCN), der so ausgebildet ist, dass er einen DCN-Fehler erkennt und einen Babbling-Idiot (BI) -Detektor, der zum Erkennen eines BI-Fehlers ausgebildet ist. Außerdem umfasst er einen FlexRay-Netzwerkdecoder, der ausgebildet ist, um ein Signal bezüglich des Status des FlexRay-Netzwerks an den RLCN-Detektor, den DCN-Detektor und den BI-Detektor auszugeben, wobei der RLCN-Detektor, der DCN-Detektor und der BI-Detektor ausgebildet sind, um eine Anzeige eines Fehlers an ein Containment-Modul zu senden.

Aus der WO 2008/001157 A1 ist ein Netzwerkknoten bekannt, welcher ein Verfahren zum Bereitstellen von schnellen und genauen Verkehrsinformationen während normaler Verkehrsschwankungen in einem Netzwerk implementiert. Dabei kann der Netzwerkknoten als Randknoten, Router oder Netzwerkverwaltungsknoten ausgebildet sein. Das Verfahren kann auch für plötzliche und große Änderungen der Verkehrsbedingungen im Netzwerk herangezogen werden.

Aus Zhou Rui et al. ("On design and formal verification of SNSP: a novel real-time communication protocol for safetycritical applications", Journal of supercomputing, Bd.69, Nr.3, S.1254-1283*)* ist ein Sicherheitsknoten-Abfolgeprotokoll (SNSP) bekannt, welches als Variante zu einem vollständig zeitgeschaltenen TTP/C - Protokoll ausgebildet ist.

Die Aufgabe der vorliegenden Erfindung liegt darin Verfahren und Vorrichtungen anzugeben, mit denen ein vorliegender fehlerhafter Knoten in einem Netzwerk, der zu einer Überlastung eines Datenverkehrs in zumindest einem Teil des Netzwerks führen kann, zu identifizieren, wodurch der Knoten isoliert und die Dienstgüte in dem Netzwerk erhöht werden kann.

Diese Aufgabe wird durch die unabhängigen Ansprüche gelöst. Weiterbildungen der Erfindung sind in den abhängigen Ansprüchen zu entnehmen.

Die Erfindung betrifft ein Verfahren zum Identifizieren eines vorliegenden fehlerhaften Knotens in einem Netzwerk gemäß dem unabhängigem Anspruch 1.

Das Verfahren zeigt den Vorteil, dass ein Erkennen des überwachten Knotens als fehlerhafter Knoten in Anhängigkeit von dem zugehenden Datenverkehrs erkannt werden kann. Mit anderen Worten, die Schwelle, an der der überwachet Knoten als fehlerhafter Knoten erkannt wird passt sich dynamisch an den zugehenden Datenverkehr an. Dies ermöglicht die Nutzung der Erfindung in einer singulären Ethernet-Ringstruktur, in der die notwendige Redundanz durch Nutzung beider Richtungen im Ring realisiert wird, für eine fail-operational Kommunikation zu verwenden.

Vollständig bedeutet, dass der gesamte Datenverkehr von einem Knoten zu dem überwachten Knoten als auch von dem überwachten Knoten zu einem der Knoten des Netzwerks durch die Beobachterknoten analysiert wird. Die Knoten K1 und K3 werden als Beobachterknoten KB1, KB2 selektiert, da sie den gesamten zugehenden Datenverkehr und den gesamten abgehenden Datenverkehr des Knotens K2 vollständig erfassen können. Im Besonderen läuft der zugehende und abgehende Datenverkehr vollständig über diese Beobachterkonten. Vollständig bedeutet nicht, dass alle Datenpaketklassen in die Überwachung einfließen müssen. Insbesondere kann es vorteilhaft sein, nur sicherheitskritische oder hochpriore Datenpaketklassen zu überwachen.

In einer Erweiterung der Erfindung wird der erwartete abgehende Gesamtdatenverkehr des überwachten Knotens durch Summenbildung aus

(i) einem oder mehreren erwarteten abgehenden Datenverkehre und
(ii) dem zu erwartenden Datenverkehr der Datenquelle des zumindest einen Gerätes,

wobei ein jeweiliger erwarteter ausgehender Datenverkehr durch eine Multiplikation von

(a) einer Anzahl an abgehenden Datenpaketen pro eingehendem Datenpaket der jeweilige Datenpaketklasse und
(b) dem jeweils dazugehörigen zugehenden Datenverkehr gebildet wird.

Hierdurch ist eine Rechenvorschrift zur Ermittlung des erwarteten abgehenden Gesamtdatenverkehr angegeben, die in einfacher und somit kostengünstiger Weise implementiert und ausgeführt werden kann.

In vorteilhafter Weise wird die Datenpaketklasse durch zumindest eine der folgenden Eigenschaften des jeweiligen Datenpakets des zugehenden Datenverkehrs und des abgehenden Datenverkehrs bestimmt wird:

a) Weiterleitungstyp "unicast"
b) Weiterleitungstyp "multi-cast"
c) Weiterleitungstyp "broadcast"
d) Prioritätsklasse.

Hierdurch wird erreicht, dass der erwartete abgehende Gesamtdatenverkehr in sehr genauer Weise bestimmt werden kann, da die Bestimmung die spezifischen Eigenheiten von unterschiedlichen Datenpaketklassen berücksichtigt. Durch die genaue Bestimmung kann eine fehlerhafte Erkennung des überwachten Knotens als fehlerhafter Knoten bzw. als nicht fehlerhafter Knoten verbessert werden, so dass die Dienstgüte im Netzwerk weiter erhöht wird.

So wird für die Datenpaketklasse vom Weiterleitungstyp "unicast" der erwartete abgehende Datenverkehr gleich dem zugehenden Datenverkehr gesetzt wird. So wird für die Datenpaketklasse vom Weiterleitungstyp "multi-cast" der erwartete abgehende Datenverkehr durch ein Multiplikationsergebnis aus einer zur Verfügung stehenden Anzahl Verbindungsausgängen des überwachten Knotens zu direkt benachbarten Knoten des überwachten Knotens mit dem zugehenden Datenverkehr bestimmt, wobei die zur Verfügung stehende Anzahl zwischen Null und einer um Eins verminderten Anzahl an Verbindungsausgängen zu direkt benachbarten Knoten des überwachten Knotens bestimmt wird. So kann für die Datenpaketklasse vom Weiterleitungstyp "broadcast" der erwartete abgehende Datenverkehr durch ein Multiplikationsergebnis aus einer um Eins verminderten Anzahl an Verbindungsausgängen zu direkt benachbarten Knoten des überwachten Knotens mit dem zugehenden Datenverkehr bestimmt werden. Durch den Einsatz dieser spezifischen Rechenvorschriften kann in vorteilhafter Weise gewährleistet werden, dass verschiedene Implementierungen der Erfindung in derselben Art und Weise den überwachten Knoten als fehlerhaften Knoten erkennen. Dies erhöht die Zuverlässigkeit des Netzwerks weiter. In vorteilhafter Weise werden die Schritte des Verfahrens erst dann ausgeführt werden, falls durch den abgehenden Datenverkehr eine vorgebare Datenmenge pro Zeiteinheit überschritten wird. Hierdurch wird gewährleistet, dass das Verfahren Systemressourcen eines Netzwerks nur dann belastet, falls kritische Datenmengen empfangen werden.

In einer vorteilhaften Weiterbildung der Erfindung wird zumindest eine der Verbindungen des überwachten Knotens, insbesondere zumindest eine der von dem überwachten Knoten abgehenden Verbindung, unterbrochen, falls der überwachte Knoten als fehlerhafter Knoten detektiert wird. Hierdurch wird eine Fehlfunktion des Netzwerks vermieden, da das Netzwerk nicht mit einer großen Datenmenge geflutet wird. Dies erhöht die Dienstgüte des Netzwerks bei Vorliegen des fehlerhaften Knotens.

Die Erfindung betrifft auch eine Vorrichtung zur Identifikation eines vorliegenden fehlerhaften Knotens gemäß dem unabhängigem Anspruch 9.

Hierdurch kann in vorteilhafter Weise die Erfindung implementiert und ausgeführt werden. Vorteile der Vorrichtung sind analog zu den korrespondierenden Verfahrensschritten.

In einer vorteilhaften Weiterbildung der Vorrichtung weist die Vorrichtung eine siebte Einheit auf, die derart ausgestaltet ist, dass mittels der siebten Einheit ein oder mehrere der zuvor beschriebenen Verfahrensschritte implementierbar und ausführbar ist. Vorteile der Vorrichtung sind analog zu den korrespondierenden Verfahrensschritten.

Die Erfindung und ihre Vorteile werden anhand nachfolgender Zeichnungen näher erläutert:

Fig. 1    Netzwerk mit einem fehlerhaften Knoten gemäß einem ersten Ausführungsbeispiel;

Fig. 2    Netzwerk gemäß einem zweiten Ausführungsbeispiel, bei dem mehrere möglicherweise fehlerhaften Knoten gemeinsam überwacht werden;

Fig. 3    Vorrichtung zum Durchführen der Erfindung;

Fig. 4    Ein überwachter Knoten mit zugehendem Datenverkehr und abgehenden Datenverkehr.

Elemente mit gleicher Funktion und Wirkungsweise sind in den Figuren mit denselben Bezugszeichen versehen.

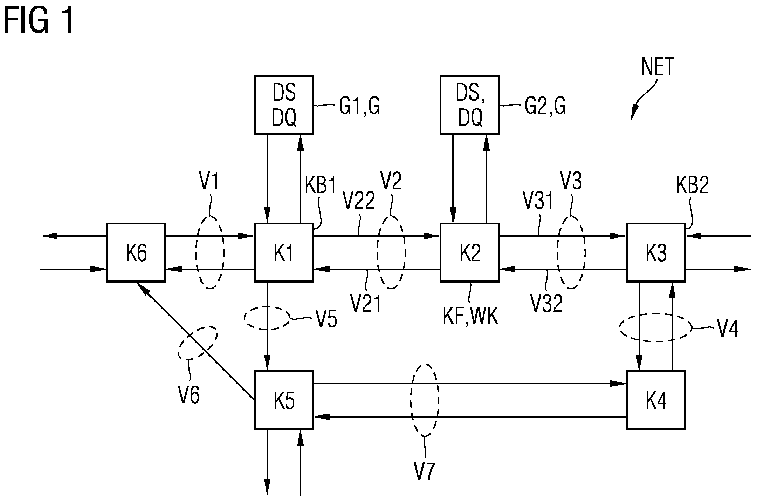

Ein erstes Ausführungsbeispiel, gemäß Figur 1, zeigt sechs Knoten K1,..., K6, die über Verbindungen V1, ..., V7 miteinander verbunden sind. Ein jeweiliger Pfeil zeigt pro Verbindung eine Übertragungsrichtung an. So besteht eine unidirektionale Übertragungsrichtung vom Knoten K2 zum Knoten K1 über eine Teilverbindung V21 und eine weitere unidirektionale Teilverbindung V22 von Knoten K1 zu Knoten K2. Somit gibt eine Pfeilrichtung eine unidirektionale Übertragungsrichtung an. Einige der Knoten weisen gekoppelte Geräte G, G1, G2 auf, wobei diese Geräte im Gegensatz zu den Knoten, Datenpakete nicht an weitere Knoten weiterleiten, sondern selbst als Datensenke, d.h. als Empfänger von Datenpaketen, und/oder als Datenquelle, d.h. als Erzeuger von Datenpaketen, ausgebildet sind.

Im vorliegenden Beispiel ist das Netz NET Teil eines Automatisierungsnetzwerkes in einer Fertigungsanlage, wobei die Geräte G1, G2 jeweils Lagesensoren darstellen, die in regelmäßigen Abständen Messwerte für eine geografische Lage von Bauteilen auf einem Transportband in Form eines jeweiligen Datenpakets an den jeweils gekoppelten Knoten zur Weiterleitung liefern. Zudem können diese Geräte mit Parametern, die mittels Datenpakete durch die Geräte empfangen werden, parametriert werden, beispielsweise zu welchen Zeitpunkten Messwerte aufgenommen werden sollen.

Nachfolgend soll überprüft werden, ob der Knoten K2 ein fehlerhafter Knoten KF ist, der wie ein "babbling idiot" eine Datenkommunikation von dem Knoten K3 zu dem Knoten K1 aufgrund einer zu großen Paketgenerierung behindert. Der Knoten K2 ist somit ein überwachter Knoten (WK).

Hierzu werden zunächst zwei Beobachterknoten KB1, KB2 im Netzwerk ausgewählt, die sowohl einen zugehenden Datenverkehr DZU einer jeweiligen Datenpaketklasse CLA zu dem überwachten Knoten als auch einen abgehenden Datenverkehr DAB der jeweiligen Datenpaketklasse CLA von dem überwachten Knoten zu den Knoten vollständig erfassen. Vollständig bedeutet, dass der gesamte Datenverkehr von einem Knoten zu dem überwachten Knoten als auch von dem überwachten Knoten zu einem der Knoten des Netzwerk durch die Beobachterknoten analysiert wird. Die Knoten K1 und K3 werden als Beobachterknoten KB1, KB2 selektiert, da sie den gesamten zugehenden Datenverkehr und den gesamten abgehenden Datenverkehr des Knotens K2 vollständig erfassen können. Im Besonderen läuft der zugehende und abgehende Datenverkehr vollständig über diese Beobachterkonten.

Der zugehende Datenverkehr DZU wird gemäß Figur 1 durch die Teilverbindungen V22 und V32 gewonnen. Hierzu beobachten die Beobachterknoten ihre jeweiligen Ausgänge, die zu den Teilverbindungen V22 und V32 gehören, also die dazugehörigen Ports, und ermitteln über einen vorgebbaren Zeitraum von z.B. 100 ms (ms - Milisekunden) die dort auftretenden Datenmengen je Datenpaketklasse. Im Beispiel wird angenommen, dass nur eine einzige Datenpaketklasse vorliegt. Im vorliegenden Beispiel ergibt sich der zugehende Datenverkehr DZU, zu 20kByte. Analog dazu beobachten die Beobachterknoten an ihren jeweiligen Eingängen, d.h. Ports, die Teilverbindungen V21 und V31, die in Summe dem abgehenden Datenverkehr DAB entsprechen. Im vorliegenden Beispiel ist DAB = 30000 Bytes.

Ferner ist bekannt, dass das Gerät G1 einen zu erwartenden Datenverkehr DVG von 200 Bytes im Zeitraum von 100ms erzeugen kann.

In einem Zwischenschritt wird ein erwarteter abgehender Datenverkehr DVW1 berechnet durch

$$DVW1 = A(CLA) \ x \ DZU.$$

Hierbei bestimmt eine Anzahl A, wie viele abgehende Datenpakete pro eingehendem Datenpaket für eine vorgebbare Datenpaketklasse erzeugt werden. Im aktuellen Beispiel wird eine Länge eines eingehenden Datenpakets zu dem korrespondierenden ausgehenden Datenpaket als identisch angenommen.

Im vorliegenden Beispiel wird angenommen, dass die Datenpakete des jeweiligen Datenverkehrs ausschließlich von einer Datenpaketklasse von einem Weiterleitungstyp Unicast sind. Der Weiterleitungstyp ist beispielsweise durch eine spezielle Markierung im Datenpaket oder durch die Konfiguration des Netzwerks vorgegeben. Unicast bedeutet in diesem Zusammenhang, dass ein Datenpaket, das von einem Knoten empfangen wird, lediglich an einen der benachbarten Knoten oder an das Gerät weitergeleitet wird. Somit ist A(CLA) = 1. Im vorliegenden Beispiel wird der erste erwartete abgehende Datenverkehr DVW1 ermittelt zu

$$DVW1 = 1 \ x \ 20kByte = 20000 \ Bytes.$$

Da lediglich Datenpakete der Datenpaketklasse vom Weiterleitungstyp Unicast verschickt werden, wird der erwartete abgehende Gesamtdatenverkehr GDV durch den erwarteten abgehenden Datenverkehr und den zu erwartende Datenverkehr der Datenquelle des Geräts G2 bestimmt zu:

$$GDV = DVW1 + DVG = 20kByte + 200Bytes = 20200\ Bytes.$$

Das bedeutet, dass der Knoten K2 einen abgehenden Gesamtdatenverkehr von 20,2Kbyte erzeugen sollte.

Nachfolgend wird überprüft, ob der überwachte Knoten WK ein fehlerhafter Knoten KF ist. Hierzu wird aus der Differenz des abgehenden Datenverkehrs DAB und des erwarteten abgehenden Gesamtdatenverkehr GDV ein Differenzwert zu

$$DIFF = DAB - GDV = 30000\ Bytes - 20200\ Bytes = 9800\ Bytes$$

gebildet.

Dieser Differenzwert wird nachfolgend mit einem vorgebbaren Schwellwert SWLL verglichen. Übertrifft der Differenzwert den vorgebbaren Schwellwert, d.h. DIFF > SWLL, so wird der überwachte Knoten WK als fehlerhafter Knoten KF detektiert. Im vorliegenden Fall wird der Schwellwert zu 1500 Bytes gesetzt, um Verzögerungen bei einer Verarbeitung von am überwachten Knoten WK empfangenen Datenpaketen und am überwachten Knoten WK abgesandten Datenpaketen berücksichtigen zu können. Da (DIFF = 9800 Bytes) > (SWLL = 1500Bytes) ist, ist der Knoten K2 als fehlerhaft arbeitender Knoten identifiziert.

In einer alternativen Ausführung wird die Schwelle SWLL auf einen vorgebbaren Prozentsatz des zugehenden Datenverkehrs DZU, z.B. SWLL = 10% x DZU, gesetzt, um die Schwelle an verschiedene Datenmengen des zugehenden Datenverkehrs anpassen zu können.

Da der Knoten K2 als fehlerhafter Knoten KF erkannt wird, wird dieser aus dem Netzwerk genommen, so dass er das gesamte Netzwerk nachfolgend nicht mehr stören kann. Hierzu können die Knoten K1 und K3 ihre Verbindungen V2, V3 unterbrechen, beispielsweise dadurch, dass sie weder Daten an den fehlerhaften Knoten senden noch Daten von den fehlerhaften Knoten akzeptieren. Somit wird verhindert, dass der fehlerhafte Knoten KF, der als "babbling idiot" fungiert, das gesamt Netzwerk stört oder aufgrund der Vielzahl von Datenpakete eine Datenkommunikation im Netzwerk zum Erliegen kommt.

Im vorangehenden Ausführungsbeispiel wurde der Weiterleitungstyp der Datenpakete zu "Unicast" gewählt. Daneben sind noch weitere Weiterleitungstypen wie "Broadcast" und "Multicast" gängig. Der Weiterleitungstyp Broadcast bedeutet, dass für jedes bei einem der Knoten eingehenden Datenpaket mehrere Datenpakete erzeugt und an den jeweiligen Ausgängen des Knotens ausgegeben werden. Somit wird ein zweiter erwarteter abgehender Datenverkehr DVW2 durch Multiplikation aus einer um eins verminderten Anzahl an Verbindungsausgängen zu direkt benachbarten Knoten des überwachten Knotens mit dem zugehenden Datenverkehr bestimmt. Konkret in Figur 1 zeigt sich, dass der überwachte Knoten zwei Ausgänge aufweist, die zu direkt benachbarten Knoten K1 und K3 geführt sind. Somit wird der zweite erwarteter abgehender Datenverkehr DW2 = (2-1) x DZU ermittelt. Somit wird im Falle des Weiterleitungstyps "Broadcast" ein Datenpaket weitergeleitet. In einem anderen Szenario weist ein Knoten fünf Ausgänge zu direkt benachbarten Knoten auf. In diesem Fall wird der zweite erwartete abgehende Datenverkehr DW2 ermittelt zu DW2 = (5-1) x DZU. Hierbei werden für ein zugehendes Datenpaket durch den besagten Knoten vier Datenpakete erzeugt.

In einer Weiterbildung oder alternativen Ausführungsform der Erfindung wird als Weiterleitungstyp "Multicast" gewählt. Dieser Weiterleitungstyp zeichnet sich dadurch aus, dass ein Datenpaket an 0,1 bis n Ausgänge, die von dem Knoten direkt zu benachbarten Knoten führen, gesendet werden. Die spezifische Anzahl an zu versendenden Datenpaketen pro eingehendem Datenpaket hängt von der konkreten Parametrierung des Knotens ab, beispielsweise sind drei von fünf Ausgängen des Knotens derart parametriert, dass ein "Multicast" Datenpaket nur an die drei der fünf Ausgänge weitergeleitet wird.

Die Erfindung kann anstelle oder zusätzlich zu den Weiterleitungstypen als Datenpaketklassen, wie "unicast" oder "multicast", Prioritätsklassen unterscheiden. Beispielsweise gibt es drei Prioritätsklassen Basis, Erweiterung 1 und Erweiterung 2. Hierbei kann die Lokalisierung des fehlerhaften Knotens speziell für eine der drei Prioritätsklassen durchgeführt werden. Alternativ ist es jedoch auch möglich zwei oder mehr Klassen zusammen zu betrachten, um hieraus den erwarteten abgehenden Gesamtdatenverkehr GDV zu ermitteln. Beispielsweise werden durch die Beobachterknoten die Datenpakete berücksichtigt, die der Prioritätsklasse Basis und zugleich Unicast oder Broadcast als Weiterleitungstypen entsprechen. Gemäß dieser Vorgabe ermitteln die Beobachterknoten den zu dieser Vorgabe passenden zugehenden Datenverkehr und abgehenden Datenverkehr pro Datenpaketklasse.

In der nachfolgenden Ermittlung des erwarteten abgehenden Gesamtdatenverkehrs wird für jede Datenpaketklasse separat der jeweilige erwartete abgehende Datenverkehr ermittelt. Die folgende Tabelle zeigt eine Übersicht des jeweiligen zugehenden Datenverkehrs, des jeweiligen abgehenden Datenverkehrs und des jeweiligen erwartenden abgehender Datenverkehrs pro Datenpaketklasse für einen Beobachtungszeitraum von 2s, wobei die jeweiligen Verkehrswerte sich aus einer Summe der jeweiligen Werte ermittelt an den jeweiligen Beobachterkonten ergeben:

|  | Datenpaketklasse | Zugehender Datenverkehr DZU der jeweiligen Datenpaketklasse | Abgehender Datenverkehr DAB der jeweiligen Datenpaketklasse | Erwarteter abgehender Datenverkehr |
|---|---|---|---|---|
| 1. | unicast | 5000 Bytes | 4500 Bytes | DVW1=5000Bytes |
| 2. | broadcast | 7500 Bytes | 20000 Bytes | DVW2=2x7500Bytes = 15000 Bytes |

Im vorliegenden Ausführungsbeispiel kann die erwartete abgehenden Gesamtdatenverkehr durch Summation der jeweiligen erwarteten abgehenden Datenverkehrswerte der jeweiligen Datenpaketklasse und der zu erwartenden Datenverkehrs der Datenquelle des zumindest einen Geräts ermittelt werden. Hierbei ergibt sich:

GDV = DVW1 + DW2 + DVG = 5000Bytes + 15000Bytes + 250Bytes
GDV = 20250 Bytes

Aufgrund von zeitlichen Verzögerungen zwischen Empfangen und Senden von Datenpaketen wird der Schwellwert SWLL = 1000 Bytes gesetzt gewählt. Der Differenzwert

DIFF = (4500Bytes+20000Bytes) - 20250Bytes = 4250 Bytes
Da SWLL > DIFF ist, ist der überwachte Knoten ein fehlerhafter Knoten KF.

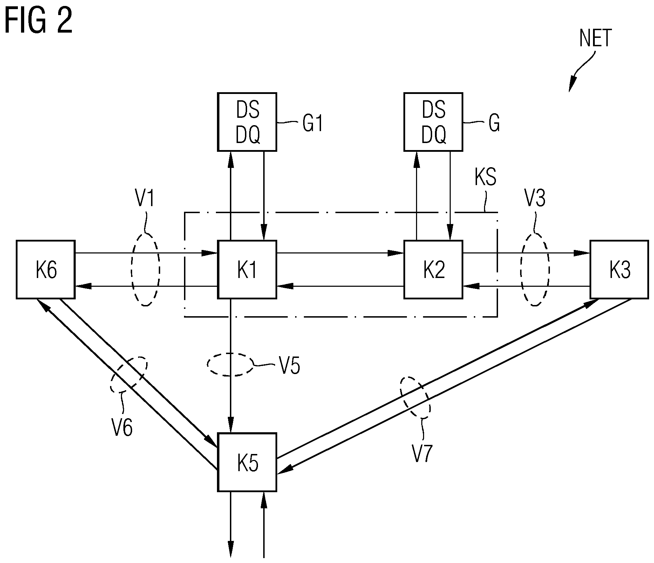

In einer Alternative des Verfahrens wird nicht nur ein einziger Knoten mit einem Gerät überwacht, sondern können auch zwei oder mehrere Knoten, die zumindest jeweils mit einem Gerät gekoppelt sind, überwacht werden. In Figur 2 sollen die Knoten K1 und K2 mit den Geräten G1, G2 überwacht werden. Hierzu wird zunächst aus den Knoten G1, G2 ein Sammelknoten KS gebildet, der alle Verbindungen aufweist, die von K1 und K2 weggehen, jedoch nicht zu den jeweiligen Geräten und nicht zu K1 bzw. K2 selbst. Die Sammelknoten umfasst die Verbindung V1, V5 und V3. Die Beobachterknoten werden nachfolgend gewählt zu K6, K5 und K3, die den gesamten zugehenden Datenverkehr zu dem Sammelknoten als auch den gesamten abgehenden Datenverkehr von dem Sammelknoten ermitteln können. Der Sammelknoten ist der überwachte Knoten WK.

Eine Vorgehensweise zur Bestimmung des erwarteten abgehenden Gesamtdatenverkehrs, des Differenzwertes und der Aussage, ob der überwachte Knoten ein fehlerhafter Knoten ist oder nicht, ist analog zu den vorangegangenen Beispielen. Die Auswertung, ob der überwachte Knoten ein fehlerhafter Knoten ist, gibt dann jedoch an, dass zumindest einer der beiden Knoten K1, K2 ein fehlerhafter Knoten ist. Ist der überwachte Knoten als fehlerhafter Knoten identifiziert, so können beide Knoten K1, K2 aus dem Netzwerk genommen, d.h. isoliert werden, so dass keine Datenpakete an diese geschickt und von diesen akzeptiert werden.

Zur Lokalisierung, welcher der beiden im Sammelknoten gefassten Knoten K1, K2 ein fehlerhafter Knoten ist, kann nachfolgend derart vorgegangen werden, dass der Knoten K1 bzw. der Knoten K2 separat geprüft werden, ob der jeweilige Knoten ein fehlerhafter Knoten ist. Im vorliegenden Beispiel gemäß Figur 2 wird dann nur der Knoten K2 auf ein fehlerhaftes Verhalten hin untersucht. Stellt sich heraus, dass Knoten K2 fehlerhaft ist, so kann dieser geblockt werden. Stellt sich heraus, dass Knoten K2 fehlerfrei arbeitet, so muss der fehlerhafte Knoten K1 sein. In diesem Fall Knoten K1 derart blockiert werden, dass dieser keine Daten in das Netzwerk schicken kann.

Zur Vermeidung einer zu starken Belastung der jeweiligen Knoten durch den Einsatz der einzelnen Schritte der Erfindung kann das Verfahren zur Erhöhung der Dienstgüte erst dann eingesetzt werden, wenn eine Verbindung oder der abgehende Datenverkehr eines spezifischen Knotens eine einstellbare Datenmenge pro Zeiteinheit überschreitet. Beispielsweise ermöglicht das Netzwerk auf den jeweiligen Verbindungen 100 MBit/s Bandbreite. So wird die Datenschwelle beispielsweise auf 70% x 100MBit/s = 70 MBit/s gesetzt. Das bedeutet, dass falls eine Verbindung und/oder abgehende Datenverkehr eines spezifischen Knotens diese vorgebbare Datenmenge DS pro Zeit überschreitet wird das Verfahren gestartet und überprüft, ob der betrachtete Knoten ein fehlerhafter Knoten ist oder nicht.

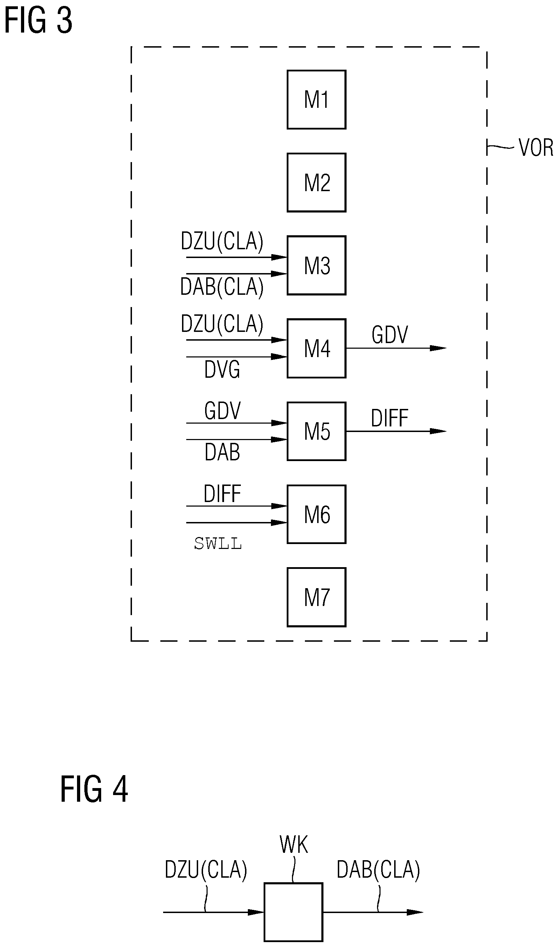

Die Erfindung kann mittels einer Vorrichtung VOR mit mehrerer Einheiten implementiert und ausgeführt werden. Figur 3 zeigt eine beispielhafte Vorrichtung mit folgenden Einheiten:

a) Erste Einheit M1 zum Auswählen von zumindest einem der Knoten K1, ..., K6 als überwachter Knoten WK;
b) Zweite Einheit M2 zum Erzeugen von zumindest zwei Beobachterknoten KB1, KB2 durch Auswahl aus den mehreren Knoten K1, K3, wobei der überwachte Knoten WK von der Auswahl ausgeschlossen ist, derart, dass

- sowohl ein zugehender Datenverkehr DZU, DZU1 einer jeweiligen Datenpaketklasse CLA zu dem überwachten Knoten WK von zumindest einem der zumindest zwei Beobachterknoten KB1, KB2
- als auch ein abgehender Datenverkehr DAB der jeweiligen Datenpaketklasse CLA von dem überwachten Knoten WK zu zumindest einem der zumindest zwei Beobachterknoten K1, K3 vollständig ermittelt wird,

c) Dritte Einheit (M3) zum Erfassen des zugehenden Datenverkehrs DZ) und des abgehenden Datenverkehrs DAB der jeweiligen Beobachterknoten KB1, KB2;
d) Vierte Einheit M3 zum Generieren von einem erwarteten abgehenden Gesamtdatenverkehr GDV des überwachten Knotens WK auf Basis (i) des durch den jeweiligen zugehenden Datenverkehr DZU der jeweiligen Datenpaketklasse CLA erzeugten abgehenden Datenverkehrs und (ii) eines erwartenden Datenverkehr DVG der Datenquelle DQ des zumindest einen Gerätes G;
e) Fünfte Einheit M5 zum Generieren eines Differenzwerts DIFF aus einer Differenz des abgehenden Datenverkehrs DAB und des erwarteten abgehenden Gesamtdatenverkehrs GDV;
f) Sechste Einheit M6 zum Detektieren des überwachten Knotens WK als fehlerhafter Knoten KF, falls durch den Differenzwert DIFF ein vorgebbarer Schwellwert SWLL überschritten wird.

Zudem kann die Vorrichtung VOR über eine siebte Einheit M7 verfügen mit der Erweiterungen und/oder Alternativen der Erfindung implementierbar und ausführbar sind.
Die Einheiten M1, ..., M7 können in einem oder mehreren der Knoten des Netzwerks, zum Beispiel in den Beobachterknoten KB1, KB2 implementiert sein, wobei die Knoten über das Netzwerk miteinander kommunizieren um Werte, wie den zugehenden Datenverkehr, mitzuteilen bzw. auch auszutauschen. Um eine sichere Kommunikation zwischen den besagten Knoten zu gewährleisten können diese ggfs. über Verbindungen kommunizieren, wobei diese Verbindungen nicht über den überwachten Knoten führen. Somit können einige der Einheiten auf mehreren Knoten und einige andere Einheiten nur auf einem der Knoten implementiert sein und ausgeführt werden. Die Einheiten und ihre Funktionen können folgendermaßen auf die Beobachterknoten verteilt sein:

Beobachterknoten KB1:

- Erste Einheit M1
- Zweite Einheit M2
- Dritte Einheit M3
- Vierte Einheit M4
- Fünfte Einheit M5
- Sechste Einheit M6
- Siebte Einheit M7

Beobachterknoten KB2:

- Dritte Einheit M3

Es sei angemerkt, dass nicht alle Einheiten bzw. Verfahrensschritte auf den Beobachterknoten verteilt sein müssen. Vielmehr können die Einheiten bzw. Verfahrensschritte auf mehreren Knoten im Netzwerk verteilt implementiert und ausgeführt werden, wobei der überwachte Knoten selbst keine der Einheiten bzw. Verfahrensschritte realisiert.
Die Einheit M1, ..., M7 können in Software, Hardware oder in einer Kombination aus Soft- und Hardware. Dabei können einzelne Verfahrensschritte in einem maschinenlesbaren Code auf einem Speicher abgelegt sein. Der Speicher kann mit einem Prozessor derart verbunden sein, dass dieser Prozessor den maschinenlesbaren Code aus dem Speicher lesen und die jeweiligen codierten Anweisungen des maschinenlesbaren Codes ausführen kann. Ferner kann der Prozessor mit einer Ein- und/oder Ausgabeeinheit verbunden sein, die zum Austausch von Informationen mit anderen Einheiten und Knoten einsetzbar ist.

**Patentansprüche**

1. Verfahren zum Identifizieren eines vorliegenden fehlerhaften Knotens (KF) in einem Netzwerk (NET) mit mehreren Knoten (K1, ..., K6), bei dem die Knoten (K1, ..., K6) zum Austausch von Datenpaketen miteinander über jeweilige Verbindungen (V1, ..., V7) verbunden sind, mit folgenden Schritten:

a) Auswahl von zumindest einem der Knoten (K1, ..., K6) als überwachter Knoten (WK);

**dadurch gekennzeichnet, dass**
der fehlerhafte Knoten (KF) mit zumindest einem Gerät (G) gekoppelt ist, das zumindest eine Gerät (G) als Datensenke (DS) und/oder Datenquelle (DQ) arbeitet, sowie
durch die folgenden Schritte:

b) Erzeugen von zumindest zwei Beobachterknoten (KB1, KB2) durch Auswahl aus den mehreren Knoten (K1, K3), wobei der überwachte Knoten (WK) von der Auswahl ausgeschlossen ist, derart, dass

- sowohl ein zugehender Datenverkehr (DZU) einer jeweiligen Datenpaketklasse (CLA) zu dem überwachten Knoten (WK) von zumindest einem der zumindest zwei Beobachterknoten (KB1, KB2)
- als auch ein abgehender Datenverkehr (DAB) der jeweiligen Datenpaketklasse (CLA) von dem überwachten Knoten (WK) zu zumindest einem der zumindest zwei Beobachterknoten (K1, K3) vollständig ermittelt wird;

c) Erfassen des zugehenden Datenverkehrs (DZU) und des abgehenden Datenverkehrs (DAB) der jeweiligen Beobachterknoten (KB1, KB2);
d) Generieren von einem erwarteten abgehenden Gesamtdatenverkehr (GDV) der überwachten Datenpaketklassen (CLA) des überwachten Knotens (WK) auf Basis (i) der Summe eines jeden durch den jeweiligen zugehenden Datenverkehr (DZU) der überwachten Datenpaketklasse (CLA) erzeugten abgehenden Datenverkehrs (DAB) und (ii) eines zu erwartenden Datenverkehrs (DVG) der Datenquelle (DQ) des zumindest einen Gerätes (G);
e) Generieren eines Differenzwerts (DIFF) aus einer Differenz des abgehenden Datenverkehrs (DAB) und des erwarteten abgehenden Gesamtdatenverkehrs (GDV);
f) Detektieren des überwachten Knotens (WK) als fehlerhafter Knoten (KF), falls durch den Differenzwert (DIFF) ein vorgebbarer Schwellwert (SWLL) überschritten wird.

2. Verfahren nach Anspruch 1,
   **dadurch gekennzeichnet, dass**
   der erwartete abgehende Gesamtdatenverkehr (GDV) des überwachten Knotens (WK) durch Summenbildung aus

   (i) einem oder mehreren erwarteten abgehenden Datenverkehre und
   (ii) dem zu erwartenden Datenverkehr (DVG) der Datenquelle (DQ) des zumindest einen Gerätes (G), wobei ein jeweiliger erwarteter abgehender Datenverkehr durch eine Multiplikation von

   (a) einer Anzahl an abgehenden Datenpaketen pro eingehendem Datenpaket der jeweilige Datenpaketklasse (CLA) und
   (b) dem jeweils dazugehörigen zugehenden Datenverkehr (DZU) gebildet wird;

3. Verfahren nach einem der vorhergehenden Ansprüche,
   **dadurch gekennzeichnet, dass**
   die Datenpaketklasse (CLA) durch zumindest eine der folgenden Eigenschaften des jeweiligen Datenpakets des zugehenden Datenverkehrs und des abgehenden Datenverkehrs bestimmt wird:

   a) Weiterleitungstyp "unicast"
   b) Weiterleitungstyp "multi-cast"
   c) Weiterleitungstyp "broadcast"
   d) Prioritätsklasse.

4. Verfahren nach Anspruch 3,
   **dadurch gekennzeichnet, dass**
   für die Datenpaketklasse (CLA) vom Weiterleitungstyp "unicast" der erwartete abgehende Datenverkehr gleich dem zugehenden Datenverkehr (DZU) gesetzt wird.

5. Verfahren nach einem der Ansprüche 3 bis 4,
   **dadurch gekennzeichnet, dass**
   für die Datenpaketklasse (CLA) vom Weiterleitungstyp "multicast" der erwartete abgehende Datenverkehr durch ein Multiplikationsergebnis aus einer zur Verfügung stehenden Anzahl Verbindungsausgängen des überwachten Knotens (WK) zu direkt benachbarten Knoten (K1, K2) des überwachten Knotens (WK) mit dem zugehenden Datenverkehr (DZU) bestimmt wird, wobei die zur Verfügung stehende Anzahl zwischen Null und einer um Eins verminderten Anzahl an Verbindungsausgängen zu direkt benachbarten Knoten (K1, K2) des überwachten Knotens (WK) bestimmt wird.

6. Verfahren nach einem der Ansprüche 3 bis 5,
   **dadurch gekennzeichnet, dass**
   für die Datenpaketklasse (CLA) vom Weiterleitungstyp "broadcast" der erwartete abgehende Datenverkehr durch ein Multiplikationsergebnis aus einer um Eins verminderten Anzahl an Verbindungsausgängen zu direkt benachbarten Knoten (K1, K2) des überwachten Knotens (WK) mit dem zugehenden Datenverkehr (DZU) bestimmt wird.

7. Verfahren nach einem der vorhergehenden Ansprüche,
   **dadurch gekennzeichnet, dass**
   die Schritte des Anspruchs 1 erst dann ausgeführt werden, falls durch den abgehenden Datenverkehr (DAB) eine vorgebare Datenmenge (DS) pro Zeiteinheit überschritten wird.

8. Verfahren nach einem der vorhergehenden Ansprüche,
   **dadurch gekennzeichnet, dass**
   zumindest eine der Verbindungen (V1, ..., V7) des überwachten Knotens (WK), insbesondere eine der von dem überwachten Knoten (WK) abgehenden Verbindung (V1, ..., V7), unterbrochen wird, falls der überwachte Knoten (WK) als fehlerhafter Knoten (KF) detektiert wird.

9. Vorrichtung (VOR) zur Identifikation eines vorliegenden fehlerhaften Knotens (KF) in einem Netzwerk (NET) mit mehreren Knoten (K1, ..., K6), bei dem die Knoten (K1, ..., K6) zum Austausch von Datenpaketen miteinander über jeweilige Verbindungen (V1, ..., V7) verbunden sind, , aufweisend eine:

   a) Erste Einheit (M1) zum Auswählen von zumindest einem der Knoten (K1, ..., K6) als überwachter Knoten (WK);

   **dadurch gekennzeichnet, dass**
   der fehlerhafte Knoten (KF) mit zumindest einem Gerät (G) gekoppelt ist, das zumindest eine Gerät (G) als Datensenke (DS) und/oder Datenquelle (DQ) arbeitet, sowie
   durch folgende Einheiten:

   b) Zweite Einheit (M2) zum Erzeugen von zumindest zwei Beobachterknoten (KB1, KB2) durch Auswahl aus den mehreren Knoten (K1, K3), wobei der überwachte Knoten (WK) von der Auswahl ausgeschlossen ist, derart, dass

   - sowohl ein zugehender Datenverkehr (DZU) einer jeweiligen Datenpaketklasse (CLA) zu dem überwachten Knoten (WK) von zumindest einem der zumindest zwei Beobachterknoten (KB1, KB2)
   - als auch ein abgehender Datenverkehr (DAB) der jeweiligen Datenpaketklasse (CLA) von dem überwachten Knoten (WK) zu zumindest einem der zumindest zwei Beobachterknoten (K1, K3) vollständig ermittelt wird,

   c) Dritte Einheit (M3) zum Erfassen des zugehenden Datenverkehrs (DZU) und des abgehenden Datenverkehrs (DAB) der jeweiligen Beobachterknoten(KB1, KB2);
   d) Vierte Einheit (M4) zum Generieren von einem erwarteten abgehenden Gesamtdatenverkehr (GDV) der überwachten Datenpaketklassen (CLA) des überwachten Knotens (WK) auf Basis (i) der Summe eines jeden durch den jeweiligen zugehenden Datenverkehr (DZU) der überwachten Datenpaketklasse (CLA) erzeugten abgehenden Datenverkehrs und (ii) eines zu erwartenden Datenverkehrs (DVG) der Datenquelle (DQ) des zumindest einen Gerätes (G);
   e) Fünfte Einheit (M5) zum Generieren eines Differenzwerts (DIFF) aus einer Differenz des abgehenden Datenverkehrs (DAB) und des erwarteten abgehenden Gesamtdatenverkehrs (GDV);
   f) Sechste Einheit (M6) zum Detektieren des überwachten Knotens (WK) als fehlerhafter Knoten (KF), falls durch den Differenzwert (DIFF) ein vorgebbarer Schwellwert (SWLL) überschritten wird.

10. Vorrichtung (VOR) gemäß Anspruch 9,
    **gekennzeichnet durch**

eine siebte Einheit (M7), die derart ausgestaltet ist, dass mittels der siebten Einheit (M7) ein oder mehrere Verfahrensschritte zumindest einer der Ansprüche 2 bis 8 implementierbar und ausführbar ist.

**Claims**

1. Method for identifying a present faulty node (KF) in a network (NET) having a plurality of nodes (K1, ..., K6), in which the nodes (K1, ..., K6) are connected to one another via respective connections (V1, ..., V7) for the purpose of interchanging data packets, having the following steps of:

   a) selecting at least one of the nodes (K1, ..., K6) as a monitored node (WK);
   **characterized in that**
   the faulty node (KF) is coupled to at least one device (G), and the at least one device (G) operates as a data sink (DS) and/or a data source (DQ), and also
   b) producing at least two observer nodes (KB1, KB2) by selecting from the plurality of nodes (K1, K3), the monitored node (WK) being excluded from the selection, in such a manner that

   - both incoming data traffic (DZU) of a respective data packet class (CLA) to the monitored node (WK) from at least one of the at least two observer nodes (KB1, KB2)
   - and outgoing data traffic (DAB) of the respective data packet class (CLA) from the monitored node (WK) to at least one of the at least two observer nodes (K1, K3) are completely determined;

   c) recording the incoming data traffic (DZU) and the outgoing data traffic (DAB) of the respective observer nodes (KB1, KB2);
   d) generating expected total outgoing data traffic (GDV) of the monitored data packet classes (CLA) of the monitored node (WK) on the basis of (i) the sum of each outgoing data traffic item (DAB) produced by the respective incoming data traffic (DZU) of the monitored data packet class (CLA) and (ii) expected data traffic (DVG) of the data source (DQ) of the at least one device (G);
   e) generating a difference value (DIFF) from a difference between the outgoing data traffic (DAB) and the expected total outgoing data traffic (GDV);
   f) detecting the monitored node (WK) as a faulty node (KF) if the difference value (DIFF) exceeds a predefinable threshold value (SWLL).

2. Method according to Claim 1,
   **characterized in that**
   the expected total outgoing data traffic (GDV) of the monitored node (WK) is formed by summing

   (i) one or more expected outgoing data traffic items and
   (ii) the expected data traffic (DVG) of the data source (DQ) of the at least one device (G),
   a respective expected outgoing data traffic item being formed by multiplying

   (a) a number of outgoing data packets for each incoming data packet of the respective data packet class (CLA) and
   (b) the respectively associated incoming data traffic (DZU).

3. Method according to one of the preceding claims,
   **characterized in that**
   the data packet class (CLA) is determined by at least one of the following properties of the respective data packet of the incoming data traffic and of the outgoing data traffic:

   e) "unicast" forwarding type
   f) "multicast" forwarding type
   g) "broadcast" forwarding type
   h) priority class.

4. Method according to Claim 3,
   **characterized in that**
   the expected outgoing data traffic is set to be equal to the incoming data traffic (DZU) for the data packet class (CLA) of the "unicast" forwarding type.

5. Method according to one of Claims 3 to 4,
   **characterized in that** the expected outgoing data traffic for the data packet class (CLA) of the "multicast" forwarding type is determined by a result of multiplying an available number of connection outputs of the monitored node (WK) to directly adjacent nodes (K1, K2) of the monitored node (WK) by the incoming data traffic (DZU), the available number being determined between zero and a number of connection outputs to directly adjacent nodes (K1, K2) of the monitored node (WK) which has been reduced by one.

6. Method according to one of Claims 3 to 5,
   **characterized in that**
   the expected outgoing data traffic for the data packet class (CLA) of the "broadcast" forwarding type is determined by a result of multiplying a number of connection outputs to directly adjacent nodes (K1, K2) of the monitored node (WK) which has been reduced by one by the incoming data traffic (DZU) .

7. Method according to one of the preceding claims,
   **characterized in that**
   the steps in Claim 1 are carried out only if the outgoing data traffic (DAB) exceeds a predefinable volume of data (DS) per unit of time.

8. Method according to one of the preceding claims,
   **characterized in that**
   at least one of the connections (V1, ..., V7) of the monitored node (WK), in particular one of the connections (V1, ..., V7) going out from the monitored node (WK), is interrupted if the monitored node (WK) is detected as a faulty node (KF).

9. Apparatus (VOR) for identifying a present faulty node (KF) in a network (NET) having a plurality of nodes (K1, ..., K6), in which the nodes (K1, ..., K6) are connected to one another via respective connections (V1, ..., V7) for the purpose of interchanging data packets, having

   a) a first unit (M1) for selecting at least one of the nodes (K1, ..., K6) as a monitored node (WK) ;

   **characterized in that** the faulty node (KF) is coupled to at least one device (G) and the at least one device (G) operates as a data sink (DS) and/or a data source (DQ), and also the following units:

   b) a second unit (M2) for producing at least two observer nodes (KB1, KB2) by selecting from the plurality of nodes (K1, K3), the monitored node (WK) being excluded from the selection, in such a manner that

   - both incoming data traffic (DZU) of a respective data packet class (CLA) to the monitored node (WK) from at least one of the at least two observer nodes (KB1, KB2)
   - and outgoing data traffic (DAB) of the respective data packet class (CLA) from the monitored node (WK) to at least one of the at least two observer nodes (K1, K3) are completely determined,

   c) a third unit (M3) for recording the incoming data traffic (DZU) and the outgoing data traffic (DAB) of the respective observer nodes (KB1, KB2);
   d) a fourth unit (M4) for generating expected total outgoing data traffic (GDV) of the monitored data packet classes (CLA) of the monitored node (WK) on the basis of (i) the sum of each monitored outgoing data traffic itemproduced by the respective incoming data traffic (DZU) of the respective data packet class (CLA) and (ii) expected data traffic (DVG) of the data source (DQ) of the at least one device (G);
   e) a fifth unit (M5) for generating a difference value (DIFF) from a difference between the outgoing data traffic (DAB) and the expected total outgoing data traffic (GDV);
   f) a sixth unit (M6) for detecting the monitored node (WK) as a faulty node (KF) if the difference value (DIFF) exceeds a predefinable threshold value (SWLL).

10. Apparatus (VOR) according to Claim 9,
    **characterized by**
    a seventh unit (M7) which is configured in such a manner that one or more method steps of at least one of Claims 2 to 8 can be implemented and carried out using the seventh unit (M7).

**Revendications**

1.  Procédé pour identifier un noeud défectueux (KF) présent dans un réseau (NET) comportant plusieurs noeuds (K1,..., K6), dans lequel les noeuds (K1,..., K6) sont reliés pour échanger des paquets de données entre eux via des connexions respectives (V1, ..., V7), le procédé comprenant les étapes suivantes :

    a) sélection d'au moins un des noeuds (K1,..., K6) en tant que noeud surveillé (WK),

    **caractérisé en ce que**
    le noeud défectueux (KF) est couplé à au moins un appareil (G), le au moins un appareil (G) fonctionnant en tant que collecteur de données (DS) et/ou en tant que source de données (DQ),
    et **caractérisé par** les étapes suivantes :

    b) création d'au moins deux noeuds d'observation (KB1, KB2) par sélection parmi les plusieurs noeuds (K1, K3), le noeud surveillé (WK) étant exclu de la sélection, de manière à

    - déterminer complètement aussi bien un flux de données entrant (DZU) dans le noeud surveillé (WK) d'une catégorie respective de paquet de données (CLA) qui provient d'au moins un des deux noeuds d'observation ou plus (KB1, KB2)
    - qu'un flux de données sortant (DAB) du noeud surveillé (WK) de la catégorie respective de paquet de données (CLA) vers au moins un des deux noeuds d'observation ou plus (K1, K3),

    c) détection du flux de données entrant (DZU) et du flux de données sortant (DAB) du noeud d'observation respectif (KB1, KB2),
    d) génération d'un flux de données complet (GDV) sortant attendu des catégories de paquet de données surveillées (CLA) du noeud surveillé (WK) sur la base (i) de la somme de chaque flux de données (DAB) sortant produit par le flux de données entrant respectif (DZU) de la catégorie de paquet de données surveillée (CLA) et (ii) du flux de données attendu (DVG) de la source de données (DQ) d'au moins un appareil (G),
    e) génération d'une valeur de différence (DIFF) à partir d'une différence entre le flux de données sortant (DAB) et le flux de données complet sortant attendu (GDV), et
    f) détection du noeud surveillé (WK) en tant que noeud défectueux (KF) si la valeur de différence (DIFF) dépasse une valeur de seuil (SWLL) prédéfinie.

2.  Procédé selon la revendication 1,
    **caractérisé en ce que** le flux de données complet sortant attendu (GDV) du noeud surveillé (WK) est obtenu en additionnant :

    (i) un ou plusieurs flux de données sortant attendus, et
    (ii) le flux de données attendu (DVG) de la source de données (DQ) du au moins un appareil (G), et
    un flux de données sortant attendu respectif étant obtenu par la multiplication

    (a) d'un nombre de paquets de données sortant par paquet de données entrant de la catégorie respective de paquets de données (CLA), par
    (b) le flux de données entrant (DZU) respectivement associé.

3.  Procédé selon l'une des revendications précédentes, **caractérisé en ce que** la catégorie de paquet de données (CLA) est déterminée par au moins une des propriétés suivantes du paquet de données respectif du flux de données entrant et du flux de données sortant :

    a) mode de transmission « unicast »,
    b) mode de transmission « multicast »,
    c) mode de transmission « broadcast »,
    d) catégorie de priorité.

4.  Procédé selon la revendication 3,
    **caractérisé en ce que**, pour la catégorie de paquet de données (CLA) correspondant au mode de transmission « unicast », le flux de données sortant attendu est défini comme étant égal au flux de données entrant (DZU).

**5.** Procédé selon l'une des revendications 3 ou 4, **caractérisé en ce que**, pour la catégorie de paquet de données (CLA) correspondant au mode de transmission « multicast », le flux de données sortant attendu est déterminé par le résultat d'une multiplication d'un nombre de connexions de sortie disponibles du noeud surveillé (WK) vers des noeuds directement voisins (K1, K2) du noeud surveillé (WK) par le flux de données entrant (DZU), ce nombre de connexions de sortie disponibles étant déterminé entre zéro et un nombre de connexions de sortie vers des noeuds directement voisins (K1, K2) du noeud surveillé (WK) diminué de un.

**6.** Procédé selon l'une des revendications 3 à 5, **caractérisé en ce que**, pour la catégorie de paquet de données (CLA) correspondant au mode de transmission « broadcast », le flux de données sortant attendu est déterminé par le résultat d'une multiplication d'un nombre de connexions de sortie vers des noeuds directement voisins (K1, K2) du noeud surveillé (WK) diminué de un par le flux de données entrant (DZU).

**7.** Procédé selon l'une des revendications précédentes, **caractérisé en ce que** les étapes de la revendication 1 sont exécutées seulement si le flux de données sortant (DAB) dépasse une quantité de données (DS) par unité de temps prédéterminée.

**8.** Procédé selon l'une des revendications précédentes, **caractérisé en ce qu'**au moins une des connexions (V1, ..., V7) du noeud surveillé (WK), notamment une connexion sortante (V1,..V7) du noeud surveillé (WK) est interrompue si le noeud surveillé (WK) est détecté comme étant défectueux (KF).

**9.** Dispositif (VOR) pour identifier un noeud défectueux (KF) présent dans un réseau (NET) comportant plusieurs noeuds (K1,..., K6), dans lequel les noeuds (K1,..., K6) sont reliés pour échanger des paquets de données entre eux via des connexions respectives (V1, ..., V7), le dispositif comprenant :

a) une première unité (M1) pour sélectionner au moins un des noeuds (K1,..., K6) en tant que noeud surveillé (WK), **caractérisé en ce que**

le noeud défectueux (KF) est couplé à au moins un appareil (G), le au moins un appareil (G) fonctionnant en tant que collecteur de données (DS) et/ou en tant que source de données (DQ), et **caractérisé par** les unités suivantes :

b) une seconde unité (M2) pour créer au moins deux noeuds d'observation (KB1, KB2) par sélection parmi les plusieurs noeuds (K1, K3), le noeud surveillé (WK) étant exclu de la sélection, de manière à

- déterminer complètement aussi bien un flux de données entrant (DZU) dans le noeud surveillé (WK) d'une catégorie respective de paquet de données (CLA) provenant d'au moins un des deux noeuds d'observation ou plus (KB1, KB2)
- qu'un flux de données sortant (DAB) du noeud surveillé (WK) de la catégorie respective de paquet de données (CLA) vers au moins un des deux noeuds d'observation ou plus (K1, K3),

c) une troisième unité (M3) pour détecter le flux de données entrant (DZU) et le flux de données sortant (DAB) des noeuds d'observation respectifs (KB1, KB2),
d) une quatrième unité (M4) pour générer un flux de données complet (GDV) sortant attendu des catégories de paquet de données surveillées (CLA) du noeud surveillé (WK) sur la base (i) de la somme de chaque flux de données sortant produit par le flux de données entrant respectif (DZU) de la catégorie de paquet de données surveillée (CLA) et (ii) du flux de données attendu (DVG) de la source de données (DQ) d'au moins un appareil (G),
e) une cinquième unité (M5) pour générer une valeur de différence (DIFF) à partir d'une différence entre le flux de données sortant (DAB) et le flux de données complet sortant attendu (GDV), et
f) une sixième unité (M6) pour détecter le noeud surveillé (WK) en tant que noeud défectueux (KF) si la valeur de différence (DIFF) dépasse une valeur de seuil (SWLL) prédéfinie.

**10.** Dispositif (VOR) selon la revendication 9, **caractérisé par** une septième unité (M7) qui est conçue de telle manière qu'une ou plusieurs étapes du procédé selon au moins l'une des revendications 2 à 8 peuvent être mises en oeuvre ou exécutées par la septième unité.

FIG 1

EP 3 087 699 B1

FIG 2

EP 3 087 699 B1

FIG 3

FIG 4

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012000185
- US 2014047282 A1
- WO 2008001157 A1

**In der Beschreibung aufgeführte Nicht-Patentliteratur**

- **ZHOU RUI et al.** On design and formal verification of SNSP: a novel real-time communication protocol for safetycritical applications. *Journal of supercomputing,* vol. 69 (3), 1254-1283